# EUROPÄISCHE PATENTSCHRIFT

(11) **EP 3 932 584 B1**
(45) Veröffentlichungstag und Bekanntmachung des Hinweises auf die Patenterteilung: **14.09.2022**
(21) Anmeldenummer: 21171876.2
(22) Anmeldetag: 03.05.2021
(51) Int. Cl.: B21D 53/88, B21D 39/04, B60R 13/00, F02B 77/11, B21D 39/02

(54) **VERFAHREN ZUR HERSTELLUNG EINES MEHRLAGIGEN HITZESCHILDS**
METHOD FOR PRODUCING A MULTI-LAYER HEAT SHIELD
PROCÉDÉ DE FABRICATION D'UN ÉCRAN THERMIQUE MULTICOUCHE

(30) Priorität: 02.07.2020 DE 102020117492
(43) Veröffentlichungstag der Anmeldung: 05.01.2022
(73) Patentinhaber: Benteler Automobiltechnik GmbH, 33102 Paderborn (DE)
(72) Erfinder: Sonntag, Carsten, 33154 Salzkotten (DE); Düpmeier, Tobias, 33100 Paderborn (DE)
(74) Vertreter: Ksoll, Peter

(56) Entgegenhaltungen:
- EP-A1- 1 775 437
- WO-A1-2016/193447
- KR-A- 20100 028 349

## Beschreibung

Die Erfindung betrifft ein Verfahren zur Herstellung eines mehrlagigen Hitzeschilds gemäß den Merkmalen im Oberbegriff von Anspruch 1.

Hitzeschilde werden in verschiedenen Anwendungen an Fahrzeugen eingesetzt, um die Übertragung von Wärme zu oder von bestimmten Bereichen zu verhindern oder zu verringern. In Kraftfahrzeugen werden Hitzeschilde vorwiegend, jedoch nicht ausschließlich, in Bereichen eingesetzt, wo heiße Bauteile, wie Abgasanlagenkomponenten oder Motorkomponenten, benachbart zu wärmeempfindlichen Bauteilen, Aggregaten oder Bereichen angeordnet sind. Auch ist der Einsatz von Hitzeschilden zwischen Fahrgastzelle und Abgassystemen eines Kraftfahrzeugs üblich, um die Wärmeübertragung von Motor und Abgaskomponenten zu reduzieren.

Ein mehrlagiges Hitzeschild zählt durch die DE 20 2011 106 603 U1 zum Stand der Technik, wobei die Metalllagen randseitig durch einen Bördelung verbunden sind.

Auch die EP 1 775 437 A1 offenbart ein Hitzeschild mit einer ersten und einer zweiten Metalllage, die dadurch miteinander verbunden sind, dass ein Außenrandabschnitt der ersten Metalllage im Wesentlichen vollständig umlaufend um den Außenrand der zweiten Metalllage herum auf die zweite Metalllage gebördelt wird. Des Weiteren wird zumindest ein Teilbereich des Außenrandabschnitts an die zweite Metalllage angeschweißt und anschließend die erste und zweite Metalllage dreidimensional verformt.

Hitzeschilde in bekannter Ausführung weisen eine erste Metalllage und eine zweite Metalllage auf mit einer zwischen den Metalllagen angeordneten Isolierlage. Zur Herstellung wird in der Regel ein Sandwich hergestellt mit den beiden außenliegenden Metalllagen und dem innenliegenden Isoliermaterial. Die Herstellung erfolgt in mehreren Prozessschritten. Hierbei wird üblicherweise eine erste Metalllage tiefgezogen, um eine umlaufende 90°-Falzkante zu erzeugen. Anschließend wird die Isolierlage und darauf die zweite Metalllage positioniert. Im nächsten Schritt wird die umlaufende Falzkante mit Hilfe eines Werkzeugs umgestellt, so dass die Metalllagen randseitig durch eine Bördelung verbunden sind. Danach wird in einem weiteren Verfahrensschritt die Falzkante zwischen zwei ebenen Platten zugedrückt.

Der Erfindung liegt ausgehend vom Stand der Technik die Aufgabe zugrunde, ein Verfahren zur Herstellung eines mehrlagigen Hitzeschilds rationeller zu gestalten und insbesondere die notwendigen Fertigungsschritte, um die zumindest zwei Metalllagen randseitig zu verbinden, zu reduzieren.

Die Lösung dieser Aufgabe besteht nach der Erfindung in einem Verfahren gemäß Anspruch 1.

Vorteilhafte Weiterbildungen des erfindungsgemäßen Verfahrens sind Gegenstand der abhängigen Ansprüche.

Ein Verfahren zur Herstellung eines mehrlagigen Hitzeschilds, welches eine erste Metalllage und eine zweite Metalllage mit einer zwischen den Metalllagen angeordneten Isolierlage aufweist und die Metalllagen randseitig durch eine Bördelung verbunden werden, sieht die folgende Vorgehensweise vor:
- Die erste Metalllage, die Isolierlage und die zweite Metalllage werden in ein erstes Pressenwerkzeug eingelegt. Hierzu kann vorab aus der ersten Metalllage, der Isolierlage und der zweiten Metalllage ein Sandwich gebildet werden, welches in das erste Pressenwerkzeug eingelegt wird. Vorteilhaft kann das Sandwich aus der ersten Metalllage, der Isolierlage und der zweiten Metalllage im ersten Pressenwerkzeug gebildet werden. Die Anordnung der ersten Metalllage, der Isolierlage und der zweiten Metalllage im ersten Pressenwerkzeug erfolgt dergestalt, dass ein Randabschnitt der ersten Metalllage gegenüber einem Randabschnitt der zweiten Metalllage übersteht und die Isolierlage gegenüber den Randabschnitten der ersten Metalllage und der zweiten Metalllage zurück versetzt ist;
- Es erfolgt dann ein Umformen des Randabschnitts der ersten Metalllage und des Randabschnitts der zweiten Metalllage relativ zur Horizontalebene der Isolierlage, wobei der Randabschnitt der ersten Metalllage und der Randabschnitt der zweiten Metalllage gemeinsam in eine Richtung umgebogen und ein überstehender Schenkel des Randabschnitts der ersten Metalllage entgegen der Umformrichtung zu einem Stehfalz umgestellt wird, welcher ein Knickende und ein freies Ende aufweist;
- Das Sandwich wird anschließend in ein zweites Pressenwerkzeug überführt und dort zwischen einem Oberwerkzeug und einem Unterwerkzeug aufgenommen und das Pressenwerkzeug geschlossen, wobei das Oberwerkzeug und das Unterwerkzeug aufeinander zu bewegt werden und bei der Schließbewegung das Oberwerkzeug mit dem Knickende des Stehfalz in Kontakt gelangt bevor das freie Ende des Stehfalz mit dem Unterwerkzeug in Kontakt gelangt und der Stehfalz des Randabschnitts der ersten Metalllage zu einem Umschlag um den Randabschnitt der zweiten Metalllage gebördelt wird.

Die Fügung der ersten Metalllage und der zweiten Metalllage mit der dazwischen aufgenommenen Isolierlage erfolgt in zwei Pressenwerkzeugen in einem zweistufigen Prozess. Durch die rationelle Ausgestaltung des Fertigungsprozesses kann ein Pressen- bzw. Umformwerkzeug eingespart werden. Die vorher üblichen drei Fertigungsschritte zur Herstellung des Hitzeschilds werden auf zwei Fertigungsschritte reduziert.

Bei den Metalllagen handelt es sich insbesondere um metallische Folien mit einer Dicke von ca. 0,2 mm. Die Metalllagen können aus Stahl und aus anderen hitzebeständigen Metallen, einschließlich Leichtmetallen bestehen. Die Isolierschicht besteht aus Isoliermaterial mit einer Dicke von vorzugsweise ca. 0,8 mm. Hierbei kann es sich um organisches Fasermaterial bzw. Faserpapier oder ähnliches, insbesondere lagenförmiges Hitzedämmmaterial, handeln.

Zur Herstellung des Hitzeschildes wird ein Sandwich aus der ersten Metalllage, der Isolierlage und der zweiten Metalllage gebildet. Dies erfolgt im ersten Pressenwerkzeug. Alle Lagen werden im Pressenwerkzeug mittels Positionierhilfen gehalten. Positionierhilfen können beispielsweise durch Positionierstifte gebildet sein. Insbesondere erfolgt die Bildung und Halterung des Sandwichs mittels Positionierhilfen im Unterwerkzeug. Positionierhilfen können aber beispielsweise auch durch die Lagen selbst ausgebildet werden, beispielsweise indem die drei Komponenten, also die erste Metalllage, die Isolierlage und die zweite Metalllage durch einen Clinch verbunden werden. Selbstverständlich ist es möglich, die einzelnen Lagen auch kraftschlüssig zwischen Oberwerkzeug und Unterwerkzeug zu positionieren.

Die erste Metalllage ist größer dimensioniert als die zweite Metalllage. Die erste Metalllage weist flächig also eine größere Abmessung auf. Die Positionierung im ersten Pressenwerkzeug erfolgt dergestalt, dass ein Randabschnitt der ersten Metalllage gegenüber einem Randabschnitt der zweiten Metalllage übersteht. Die Isolierlage ist so dimensioniert und deren Anordnung zwischen den beiden Metalllage so vorgenommen, dass die Isolierlage bzw. der Rand der Isolierlage gegenüber den Randabschnitten der ersten Metalllage und der zweiten Metalllage zurückversetzt ist. Die Isolierlage weist einen Flächeninhalt auf, der kleiner ist als der Flächeninhalt der zweiten Metalllage. Der Flächeninhalt der zweiten Metalllage ist wiederum kleiner als der Flächeninhalt der ersten Metalllage.

Der erste Umformschritt sieht dann vor, dass der Randabschnitt der ersten Metalllage und der Randabschnitt der zweiten Metalllage relativ zur Horizontalebene der Isolierlage umgeformt werden, wobei der Randabschnitt der ersten Metalllage und der Randabschnitt der zweiten Metalllage gemeinsam in eine Richtung umgebogen werden. Bei diesem Umformprozess wird der Randabschnitt der ersten Metalllage derart in eine Formaufnahme des Pressenwerkzeugs geformt, dass ein überstehender Schenkel des Randabschnitts der ersten Metalllage entgegen der Umformrichtung zu einem Stehfalz umgestellt wird. Dieser Stehfalz weist ein Knickende am Übergang vom Randabschnitt zum Stehfalz sowie ein freies Ende auf. Knickende bedeutet, dass der Stehfalz mit einer vergleichsweisen scharfen Biegung umgestellt ist.

Anschließend wird das Sandwich aus erster Metalllage und zweiter Metalllage mit dazwischen angeordneter Isolierlage in ein zweites Pressenwerkzeug überführt und dort zwischen einem Oberwerkzeug einem Unterwerkzeug aufgenommen. Das zweite Pressenwerkzeug wird dann geschlossen, wobei das Oberwerkzeug und das Unterwerkzeug relativ zueinander bzw. aufeinander zu bewegt werden. Bei der Schließbewegung gelangt das Oberwerkzeug mit dem Knickende des Stehfalz in Kontakt, und zwar bevor das freie Ende des Stehfalz mit dem Unterwerkzeug in Kontakt gelangt. Infolge der Abwärtsbewegung und der Hebelwirkung, bei der das Knickende sich an der Wand des Oberwerkzeugs abstützt und relativ zu dieser nach außen bewegt wird, wird das freie Ende des Stehfalz nach unten und nach innen in Richtung zur Isolierlage bewegt bzw. gebogen. Mit dem Zufahren des zweiten Pressenwerkzeugs legt sich der Stehfalz um den Randabschnitt der zweiten Metalllage und wird zu einem Umschlag gebördelt. Der obere Randabschnitt der ersten Metalllage und der darunter liegende Stehfalz verlaufen dann annähernd parallel zueinander. Zwischen dem Randabschnitt der ersten Metalllage und dem Stehfalz ist der Randabschnitt der zweiten Metalllage aufgenommen.

Die Fertigung erfordert lediglich zwei Pressenwerkzeuge und zwei Fertigungsschritte.

Im ersten Pressenwerkzeug wird der Stehfalz derart umgestellt, dass zwischen dem Stehfalz und dem Randabschnitt der ersten Metalllage ein spitzer Winkel eingeschlossen ist, der insbesondere kleiner oder gleich (≤) 50° bemessen ist. Bei der Anlage des Stehfalz im Pressenwerkzeugs führt der Kontakt an einem ersten Kontaktpunkt zu einer Drehbewegung des Knickendes dergestalt, dass sich das freie Ende nach einwärts bewegt. Diese Vorgehensweise unterstützt den Bördelvorgang vorteilhaft und gewährleistet, dass der Stehfalz sich im nächsten Fertigungsschritt zuverlässig nach innen auf die Isolierlage zu bewegt, wohingegen das Knickende des Stehfalz sich relativ von der Isolierlage weg nach außen bewegt.

Das freie Ende des Randabschnitts der zweiten Metalllage ist zwischen dem Stehfalz und dem Randabschnitt der ersten Metalllage aufgenommen. Insbesondere ist das freie Ende des Randabschnitts der zweiten Metalllage nach dem Umstellen des überstehenden Schenkels des Randabschnitts der ersten Metalllage im ersten Pressenwerkzeug zwischen dem Randabschnitt der ersten Metalllage und dem Stehfalz aufgenommen.

Bei der Schließbewegung des zweiten Pressenwerkzeugs bewegt sich das Knickende des Stehfalz relativ zur Isolierlage nach außen, also von der Isolierlage weg, wohingegen sich das freie Ende des Stehfalz relativ zur Isolierlage nach innen bewegt, also in Richtung zur Isolierlage.

Die Erfindung ist nachfolgend anhand von Zeichnungen näher beschrieben. Es zeigen:
- Figuren 1 und 2: einen Ausschnitt aus einem ersten Pressenwerkzeug mit der Darstellung von zwei Fertigungssituationen und
- Figuren 3 bis 6: einen Ausschnitt aus einem zweiten Pressenwerkzeug mit der Darstellung des Fertigungsablaufs zur randseitigen Verbindung der Metalllagen eines Hitzeschilds bei dessen Herstellung.

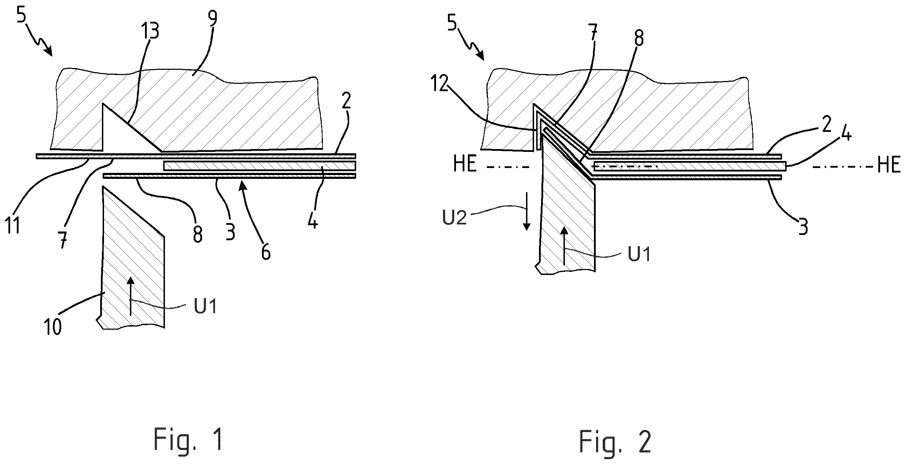

Die Herstellung eines mehrlagigen Hitzeschilds 1 ist anhand der Figuren 1 bis 6 in verschiedenen Herstellungsphasen beschrieben. Die Darstellungen sind schematisch und technisch vereinfacht sowie nicht maßstäblich zu verstehen.

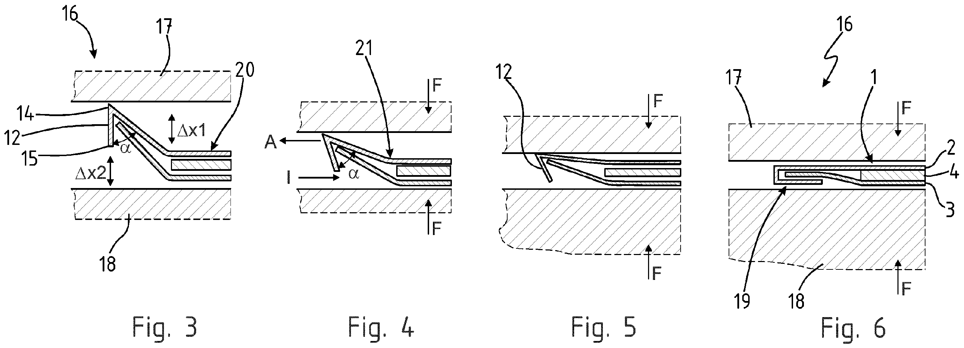

Ein erfindungsgemäß hergestelltes mehrlagiges Hitzeschild 1 (siehe hierzu Figur 6) weist eine erste Metalllage 2 und eine zweite Metalllage 3 auf mit einer zwischen den Metalllagen 2, 3 angeordneten Isolierlage 4. Die erste Metalllage 2 und die zweite Metalllage 3 sind randseitig durch eine Bördelung verbunden. Dies erfolgt insbesondere umlaufend, insbesondere umlaufend um den gesamten Umfang des Hitzeschilds 1.

Zur Herstellung des mehrlagigen Hitzeschilds 1 wird eine erste Metalllage 2 und eine zweite Metalllage 3 sowie eine Isolierlage 4 bereitgestellt. Bei der ersten Metalllage 2 und der zweiten Metalllage 3 handelt es sich insbesondere um Metallfolien mit einer Dicke von ca. 0,2 mm. Die Isolierlage 4 besteht aus Isolier- bzw. Hitzeschutzmaterial, beispielsweise einem organischen Faserpapier, und besitzt eine Dicke von ca. 0,8 mm.

Die Isolierlage 4 weist in ihrer horizontalen Erstreckung einen Flächeninhalt auf. Dieser ist kleiner bemessen als der Flächeninhalt der zweiten Metalllage 3. Die Größe der Fläche der zweiten Metalllage 3 ist wiederum kleiner bemessen als der Flächeninhalt der ersten Metalllage 2.

Die erste Metalllage 2, die Isolierlage 4 und die zweite Metalllage 3 werden in ein erstes Pressenwerkzeug 5 (Figuren 1 und 2) eingelegt. Das aus der ersten Metalllage 2, der Isolierlage 4 und der zweiten Metalllage 3 gebildete Sandwich 6 wird so ausgebildet, dass ein Randabschnitt 7 der ersten Metalllage 2 gegenüber einem Randabschnitt 8 der zweiten Metalllage 3 übersteht und die Isolierlage 4 gegenüber dem Randabschnitten 7, 8 der ersten Metalllage 2 und der zweiten Metalllage 3 zurückversetzt ist (siehe hierzu Figur 1). Anschließend werden die erste Werkzeughälfte 9 und die zweite Werkzeughälfte 10 des ersten Pressenwerkzeugs 5 relativ zueinander bewegt, wobei der Randabschnitt 7 der ersten Metalllage 2 und der Randabschnitt 8 der zweiten Metalllage 3 relativ zur Horizontalebene HE der Isolierlage 4 umgeformt werden. Hierbei werden der Randabschnitt 7 der ersten Metalllage 2 und der Randabschnitt 8 der zweiten Metalllage 3 gemeinsam in eine Richtung (Pfeil U1) umgebogen, wohingegen ein überstehender Schenkel 11 des Randabschnitts 7 der ersten Metalllage 2 entgegen der Umformrichtung (Pfeil U2) zu einem Stehfalz 12 umgeformt wird. In der Werkzeughälfte 9 ist eine Formkontur 13 vorgesehen, in welche der Randabschnitt 7 und der Randabschnitt 8 durch die zweite Werkzeughälfte 10 gedrückt werden. Der überstehende Schenkel 11 ist länger als die Öffnung der Formkontur 13 ausgebildet. Der Randabschnitt 8 der zweiten Metalllage 3 schließt mit seiner Stirnseite etwa bündig mit dem öffnungsseitigen Rand der Formkontur 13 ab.

Der Stehfalz 12 weist ein Knickende 14 und ein freies Ende 15 auf. Der zwischen dem Stehfalz 12 und dem Randabschnitt 7 der ersten Metalllage 2 eingeschlossene Winkel a ist kleiner oder gleich (≤) 50° (siehe hierzu Figur 3). In dem in der Figur 3 dargestellten der Erläuterung dienenden Ausführungsbeispiel beträgt der Winkel α ca. 45°. Das freie Ende des Randabschnitts 8 der zweiten Metalllage 3 wird zwischen dem Stehfalz 12 und dem Randabschnitt 7 der ersten Metalllage 2 aufgenommen.

Die Umformrichtung U1 entspricht der Bewegungsrichtung der ersten Werkzeughälfte 9 relativ gegenüber der zweiten Werkzeughälfte 10 des ersten Pressenwerkzeugs 5 dar. Der Stehfalz 12 wird in die entgegengesetzte Richtung U2 umgestellt.

Danach wird das Sandwich 6 in ein zweites Pressenwerkzeug 16 überführt. Das zweite Pressenwerkzeug 16 ist schematisch in den Figuren 3 bis 6 dargestellt. Das zweite Pressenwerkzeug 16 weist ein Oberwerkzeug 17 und ein Unterwerkzeug 18 auf. Das aus der ersten Metalllage 2 und der zweiten Metalllage 3 mit der dazwischen eingegliederten Isolierlage 4 gebildete und randseitig vorgeformte Sandwich 6 wird zwischen dem Oberwerkzeug 17 und dem Unterwerkzeug 18 aufgenommen. Anschließend wird das Pressenwerkzeug 16 geschlossen, wobei das Oberwerkzeug 17 und das Unterwerkzeug 18 aufeinander zu bewegt werden. Die Bewegung des Oberwerkzeugs 17 und des Unterwerkzeugs 18 und die dabei aufgebrachten Kräfte sind in den Figuren 4 bis 6 durch die Pfeile F gekennzeichnet. Es versteht sich, dass auch jeweils nur das Oberwerkzeug 17 oder das Unterwerkzeug 18 relativ zum jeweils anderen Werkzeug bewegt werden kann.

Im Pressenwerkzeug 16 werden der Randabschnitt 7 der ersten Metalllage 2 und der Randabschnitt 8 der zweiten Metalllage 3 wieder entgegen der Umformrichtung U1 aus dem ersten Fertigungsschritt zurückgebogen. Bei dieser Schließbewegung gelangt das Oberwerkzeug 17 mit dem Knickende 14 des Stehfalz 12 in Kontakt. Man erkennt das Knickende 14 des Stehfalz 12 gegenüber der Flächenerstreckung der ersten Metalllage 2, der Isolierlage 4 und der zweiten Metalllage 3 in Bildebene zum Oberwerkzeug 17 hin vorsteht.

Das Knickende 14 des Stehfalz 12 gelangt in Kontakt mit dem Oberwerkzeug 17. Hierdurch wird das Knickende 14 abwärts gedrückt. Hierbei gleitet das Knickende 14 gemäß dem Pfeil A nach außen. Der Randabschnitt 7 der ersten Metalllage 2 wird abwärts gebogen. Gleichzeitig wird das freie Ende 15 des Stehfalz 12 gemäß dem Pfeil I nach innen bewegt. Bei der weiteren Schließbewegung gelangt das freie Ende 15 des Stehfalz 12 mit dem Unterwerkzeug 18 in Kontakt. Der Stehfalz 12 des Randabschnitts 7 der ersten Metalllage 2 wird umgelegt und zu einem Umschlag 19 um den Randabschnitt 8 der zweiten Metalllage 3 gebördelt.

In der Figur 3 ist der vertikale Abstand zwischen der Oberseite 20 der ersten Metalllage 2 und dem Oberwerkzeug 17 mit Δx1 gekennzeichnet. Der Abstand zwischen dem freien Ende 15 des Stehfalz 12 und dem Unterwerkzeug 18 ist durch Δx2 gekennzeichnet. Die geometrische Auslegung durch das Umbiegen der Randabschnitte 7, 8 der ersten Metalllage 2 und der zweiten Metalllage 3 sowie die Umstellung des überstehenden Schenkels 11 des Randabschnitts 7 der ersten Metalllage 2 zum Stehfalz 12 ist im ersten Fertigungsschritt derart ausgeführt, dass im zweiten Pressenwerkzeug 16 bei der Schließbewegung das Knickende 14 des Stehfalz 12 mit dem Oberwerkzeug 17 in Kontakt gelangt und von diesem heruntergedrückt wird, bevor das freie Ende 15 des Stehfalz 12 mit dem Unterwerkzeug 18 in Kontakt gelangt. Der über die Länge des Randabschnitts 7 zwischen dem Knickende 14 und dem Biegepunkt 21 wirksame Hebelarm bewirkt, dass der Stehfalz 12 nach innen umgelegt wird. Hierdurch erfolgt die Umbördelung mit der Ausbildung des Umschlags 19 in einem Zug im zweiten Pressenwerkzeug 16.

Die Fertigung des Hitzeschilds 1 erfolgt in rationeller Weise in zwei Fertigungsschritten und zwei Pressenwerkzeugen 5 bzw. 16.

### Bezugszeichen:

- 1 -: Hitzeschild
- 2 -: erste Metalllage
- 3 -: zweite Metalllage
- 4 -: Isolierlage
- 5 -: erstes Pressenwerkzeug
- 6 -: Sandwich
- 7 -: Randabschnitt von 2
- 8 -: Randabschnitt von 3
- 9 -: erste Werkzeughälfte von 5
- 10 -: zweite Werkzeughälfte von 5
- 11 -: Schenkel von 6
- 12 -: Stehfalz
- 13 -: Formkontur
- 14 -: Knickende von 12
- 15 -: freies Ende von 12
- 16 -: zweites Pressenwerkzeug
- 17 -: Oberwerkzeug
- 18 -: Unterwerkzeug
- 19 -: Umschlag
- 20 -: Oberseite von 2
- 21 -: Biegepunkt

- HE -: Horizontalebene von 4
- U1 -: Pfeil Umformrichtung
- U2 -: Pfeil Umformrichtung
- A -: Pfeil
- F -: Pfeil
- I -: Pfeil
- α -: Winkel

## Patentansprüche

1. Verfahren zur Herstellung eines mehrlagigen Hitzeschilds (1), welches eine erste Metalllage (2) und eine zweite Metalllage (3) mit einer zwischen den Metalllagen (2, 3) angeordneten Isolierlage (4) aufweist, wobei die Metalllagen (2, 3) randseitig durch eine Bördelung verbunden werden, **dadurch gekennzeichnet, dass**
- die erste Metalllage (2), die Isolierlage (4) und die zweite Metalllage (3) werden in ein erstes Pressenwerkzeug (5) eingelegt, wobei ein Randabschnitt (7) der ersten Metalllage (2) gegenüber einem Randabschnitt (8) der zweiten Metalllage (3) übersteht und die Isolierlage (4) gegenüber den Randabschnitten (7, 8) der ersten Metalllage (2) und der zweiten Metalllage (3) zurück versetzt ist;
- Umformen des Randabschnitts (7) der ersten Metalllage (2) und des Randabschnitts (8) der zweiten Metalllage (3) relativ zur Horizontalebene (HE) der Isolierlage (4), wobei der Randabschnitt (7) der ersten Metalllage (2) und der Randabschnitt (8) der zweiten Metalllage (3) gemeinsam in eine Richtung umgebogen und ein überstehender Schenkel (11) des Randabschnitts (7) der ersten Metalllage (2) entgegen der Umformrichtung zu einem Stehfalz (12) umgestellt wird, welcher ein Knickende (14) und ein freies Ende (15) aufweist;
- wonach das aus erster Metalllage (2), Isolierlage (4) und zweiter Metalllage (3) gebildete Sandwich (6) in ein zweites Pressenwerkzeug (16) überführt wird und dort zwischen einem Oberwerkzeug (17) und einem Unterwerkzeug (18) aufgenommen wird und anschließend das Pressenwerkzeug (16) geschlossen wird, wobei das Oberwerkzeug (17) und das Unterwerkzeug (18) aufeinander zu bewegt werden und bei der Schließbewegung das Oberwerkzeug (17) mit dem Knickende (14) des Stehfalz (12) in Kontakt gelangt bevor das freie Ende (15) des Stehfalz (12) mit dem Unterwerkzeug (18) in Kontakt gelangt und der Stehfalz (12) des Randabschnitts (7) der ersten Metalllage (2) zu einem Umschlag (19) um den Randabschnitt (8) der zweiten Metalllage (3) gebördelt wird.

2. Verfahren nach Anspruch 1, **dadurch gekennzeichnet, dass** der Stehfalz (12) derart umgestellt wird, dass der zwischen dem Stehfalz (12) und dem Randabschnitt (7) der ersten Metalllage (2) eingeschlossene Winkel (a) kleiner oder gleich 50° Grad beträgt.

3. Verfahren nach Anspruch 1 oder 2, **dadurch gekennzeichnet, dass** das freie Ende (15) des Randabschnitts (8) der zweiten Metalllage (3) zwischen dem Stehfalz (12) und dem Randabschnitt (7) der ersten Metalllage (2) aufgenommen wird.

4. Verfahren nach einem der Ansprüche 1 bis 3, **dadurch gekennzeichnet, dass** bei der Schließbewegung des zweiten Pressenwerkzeugs (16) das Knickende (14) des Stehfalz (12) relativ zur Isolierlage (4) nach außen und das freie Ende (15) des Stehfalz (12) relativ zur Isolierlage (4) nach innen bewegt wird.

## Claims

1. Method for producing a multi-layer heat shield (1) which has a first metal layer (2) and a second metal layer (3) with an insulating layer (4) arranged between the metal layers (2, 3), wherein the metal layers (2, 3) are connected on the edge side by a beading, characterisedin that
- the first metal layer (2), the insulating layer (4) and the second metal layer (3) are laid into a first pressing tool (5), wherein an edge portion (7) of the first metal layer (2) protrudes with respect to an edge portion (8) of the second metal layer (3) and the insulating layer (4) is offset back with respect to the edge portions (7, 8) of the first metal layer (2) and the second metal layer (3);
- shaping the edge portion (7) of the first metal layer (2) and the edge portion (8) of the second metal layer (3) relative to the horizontal plane (HE) of the insulating layer (4), wherein the edge portion (7) of the first metal layer (2) and the edge portion (8) of the second metal layer (3) are bent together in one direction and a protruding leg (11) of the edge portion (7) of the first metal layer (2) is converted, against the forming direction, into a standing seam (12) which has a bent end (14) and a free end (15);
- after which the sandwich (6) formed from first metal layer (2), insulating layer (4) and second metal layer (3) is transferred into a second pressing tool (16) and is received there between an upper tool (17) and a lower tool (18) and subsequently the pressing tool (16) is closed, wherein the upper tool (17) and the lower tool (18) are moved towards one another and during the closing movement the upper tool (17) comes into contact with the bent end (14) of the standing seam (12) before the free end (15) of the standing seam (12) comes into contact with the lower tool (18) and the standing seam (12) of the edge portion (7) of the first metal layer (2) is beaded to form a turnover (19) around the edge portion (8) of the second metal layer (3).

2. Method according to claim 1, **characterised in that** the standing seam (12) is folded such that the angle (a) subtended between the standing seam (12) and the edge portion (7) of the first metal layer (2) is less than or equal to 50°.

3. Method according to claim 1 or 2, **characterised in that** the free end (15) of the edge portion (8) of the second metal layer (3) is received between the standing seam (12) and the edge portion (7) of the first metal layer (2).

4. Method according to any of claims 1 to 3, **characterised in that** during the closing movement of the second pressing tool (16) the bent end (14) of the standing seam (12) is moved to the outside, relative to the insulating layer (4), and the free end (15) of the standing seam (12) is moved to the inside, relative to the insulating layer (4).

## Revendications

1. Procédé de fabrication d'un écran thermique (1) multicouches qui présente une première couche métallique (2) et une seconde couche métallique (3) avec une couche isolante (4) agencée entre les couches métalliques (2, 3), dans lequel les couches métalliques (2, 3) sont reliées côté bord par un bordage, **caractérisé en ce que**
- la première couche métallique (2), la couche isolante (4) et la seconde couche métallique (3) sont insérées dans un premier outil de pressage (5), dans lequel une section de bord (7) de la première couche métallique (2) dépasse par rapport à une section de bord (8) de la seconde couche métallique (3) et la couche isolante (4) est en retrait par rapport aux sections de bord (7, 8) de la première couche métallique (2) et la seconde couche métallique (3) ;
- le formage de la section de bord (7) de la première couche métallique (2) et de la section de bord (8) de la seconde couche métallique (3) par rapport au plan horizontal (HE) de la couche isolante (4), dans lequel la section de bord (7) de la première couche métallique (2) et la section de bord (8) de la seconde couche métallique (3) sont repliées ensemble dans une direction et une branche en saillie (11) de la section de bord (7) de la première couche métallique (2) est déplacée dans la direction inverse à la direction de formage pour former un joint debout (12) qui présente une extrémité pliée (14) et une extrémité libre (15) ;
- après quoi le sandwich (6) formé à partir de la première couche métallique (2), la couche isolante (4) et la seconde couche métallique (3) est transféré dans un second outil de pressage (16) et y est reçu entre un outil supérieur (17) et un outil inférieur (18) et ensuite l'outil de pressage (16) est fermé, dans lequel l'outil supérieur (17) et l'outil inférieur (18) sont déplacés l'un vers l'autre et lors du mouvement de fermeture, l'outil supérieur (17) parvient en contact avec l'extrémité pliée (14) du joint debout (12) avant que l'extrémité libre (15) du joint debout (12) ne parvienne en contact avec l'outil inférieur (18) et le joint debout (12) de la section de bord (7) de la première couche métallique (2) est rabattu en un rabat (19) autour de la section de bord (8) de la seconde couche métallique (3).

2. Procédé selon la revendication 1, **caractérisé en ce que** le joint debout (12) est déplacé de telle manière que l'angle (a) formé entre le joint debout (12) et la section de bord (7) de la première couche métallique (2) soit inférieur ou égal à 50 degrés.

3. Procédé selon la revendication 1 ou 2, **caractérisé en ce que** l'extrémité libre (15) de la section de bord (8) de la seconde couche métallique (3) est reçue entre le joint debout (12) et la section de bord (7) de la première couche métallique (2).

4. Procédé selon l'une quelconque des revendications 1 à 3, **caractérisé en ce que** lors du mouvement de fermeture du second outil de pressage (16), l'extrémité pliée (14) du joint debout (12) est déplacée par rapport à la couche isolante (4) vers l'extérieur et l'extrémité libre (15) du joint debout (12) est déplacée par rapport à la couche isolante (4) vers l'intérieur.
